# EUROPEAN PATENT APPLICATION

(11) **EP 2 394 810 A1**
(43) Date of publication of application: **14.12.2011**
(21) Application number: 10162119.1
(22) Date of filing: 06.05.2010
(51) Int. Cl.: B32B 1/08, B32B 15/08, B32B 15/20, F16L 9/147, C22C 21/02, C22C 21/04

(54) **Multilayer tubes**

(71) Applicant: Novelis Inc., Toronto, ON M8Z 1J5 (CA)
(72) Inventor: The designation of the inventor has not yet been filed
(74) Representative: HOFFMANN EITLE

(57) **Abstract**

The invention relates to a multilayer tube product comprising inner and outer plastic, or polymer, layers and an intermediate metallic layer characterized in that the intermediate metallic layer comprises an aluminium sheet having the composition (values in weight %):
Si 1.5 to 4%
Mg 0.3 to 3.0%
Mn up to 1.5%
Fe up to 1.0%
Cu up to 0.5%
Zn up to 0.3%
other elements up to 0.05% each and up to 0.2% in total remainder aluminium

The invention also relates to a multilayer tube wherein the intermediate metallic layer comprises a clad aluminium sheet having a core layer of this composition and the at least one clad layer is selected from the alloy compositions of the 1XXX, 3XXX or 7XXX series alloys.

## Description

The present invention relates to multilayer tubes, (also known as compound tubes), in which a metallic layer element is provided made from an aluminium sheet product. It also relates to multilayer tubes in which the aluminium sheet product comprises at least one clad layer on at least one side of a core layer.

Multilayer tubes are used in a wide variety of applications. Applications include use as drinking water pipes for hot or cold water, as heating or cooling pipes, as gas pipes, for compressed air conduits, or in piping systems for oil. As such these multilayer pipes have to withstand various mechanical and environmental conditions.

Such multilayer tubes have to display: high resistance to temperature aging for water temperatures up to 200° F, (115°C), high pressure resistance, high resistance to chemical solvents and aggressive liquids, lowest possible linear thermal expansion, high tensile strength, high form stability, high resistance to abrasion, high elongation at rupture for tube bending and joining and good creep resistance against the temperature-dependent aging behaviour of the tube material at water temperatures up to 200° F, (115°C)

A typical multilayer tube consists of three main tubular layers. Most often the inner and outer layers are made from polyethylene or polypropylene. The intermediate layer is usually a metallic layer of aluminium or an aluminium alloy. The three main layers are usually bonded together with intermediate adhesive layers. The thickness of each layer may vary depending on use requirements but typically the metallic / aluminium layer is between 0.15 to 2 mm thick, more usually between 0.20 to 0.40 mm thick.

These multilayer tubes take advantage of the corrosion and chemical resistance of the plastic materials in combination with the strength or pressure capacity and vapour barrier properties of the intermediate aluminium layer. The resulting tubes are corrosion resistant, bendable (and in such a way that the bent form is retained), flexible and resist most acids, salt solutions, alkalis, fats and oils.

The aluminium layer prevents oxygen or other gases from permeating into the tube which reduces or eliminates corrosion of other metallic installation components. The aluminium layer also moderates thermal expansion effects. The added strength from the aluminium layer increases the overall pressure-rupture strength of the tube compared with simple plastic tubes.

Although, in forming the tubes, the aluminium layer can be joined by overlapping and folding, it is also normal to longitudinally weld the aluminium layer to give seamlessly welded tubes.

The aluminium alloys most commonly used for the metallic layer are AA1050, AA1200, AA3003, AA3005, AA3105, AA8006 and AA8011. The alloy designation numbers used here are readily familiar to those skilled in the art of aluminium alloys and are described in "International Alloy Designations and Chemical Composition Limits for Wrought Aluminum and Wrought Aluminium Alloys", published by The Aluminum Association, regularly revised. The use of the symbol X within the register and as a way of identifying alloy compositions is well understood by the skilled person.

Thin sheets of these alloys, or foils, are generally used in a monolithic form, meaning that the aluminium sheet or foil is of the same composition throughout.

The 1 XXX series of alloys covers aluminium compositions where the aluminium content is ≥99.00% by weight. The 1XXX series is also considered to fall into two categories. One category relates to wrought unalloyed aluminium having natural impurity limits. Common alloys for multilayer tubes includes compositions known as 1050 or 1050A. The second category covers alloys where there is special control of one or more impurities. For this category the alloy designation includes a second numeral that is not zero, such as 1100, 1200, and so on.

The 3XXX series alloys have manganese as their main alloying element. AA3003 has a Mn content between 1.0 and 1.5 and includes a small addition of copper (0.05 and 0.20). AA3105 contains Mn between 0.20 and 0.8 and Mg between 0.30 and 0.8. AA3005 contains Mn between 1.0 and 1.5 with Mg between 0.20 and 0.60.

The 8XXX series of alloys is for other alloys where the main alloying elements are not those mentioned above. AA8006 has Fe as its main alloying element with an amount between 1.2 and 2.0 along with an addition of Mn between 0.3 and 1.0. AA8011 has Fe and Si as the main alloying elements with Fe between 0.6 and 1.0 and Si between 0.50 and 0.9.

Other alloy groups classified according to their main alloying element include the 5XXX series for alloys with Mg as the main element, 6XXX series where the main elements are Mg and Si and 7XXX for alloys with Zn as the main element. The 4XXX series alloys contain Si as the main alloying element and are not known for use in these multilayer tubes.

WO-A-2009/146993 discloses a multilayer pipe product comprising inner and outer plastic or polymer layers and an intermediate metallic layer characterized in that the intermediate metallic layer is a composite aluminium sheet comprising a core layer and at least one clad layer. In a preferred embodiment the chemical composition of the core layer is a composition selected from the group of alloys consisting of the 5XXX, 6XXX or 8XXX series of alloys. In a preferred embodiment the chemical composition of the at least one clad layer is a composition selected from the group of alloys consisting of the 1XXX, 3XXX or 7XXX series of alloys.

WO-A-2008/058708 discloses an aluminium alloy product for use as the metallic layer in mutli-layer tubes which comprises a monolithic sheet product where the alloy contains, (all composition values throughout in weight %): Si 0.2-1.4, Fe + Mn 1.1-1.8, Cu 0.15-0.5, Mg <0.2, Ti <0.2, Zn <1.5, impurities <0.05 each and <0.2 in total, balance aluminium.

US-A-4216802 discloses a deformable composite tube product. The product comprises a seamless inner tubular shaped layer made from a polymeric layer. The metallic layer is preferably made from an alloy of copper or aluminum and the outer layer can be selected from a variety of thermoplastically processable materials such as for example polyethylene, rubber, nylon, thermoplastic rubber, polyurethane and the like.

A three layer flexible tube is described in EP-A-0084088. The inside layer of this tube is made of a heat resistant material such as perfluoroethylene propylene or polyvinylidene fluoride. The intermediate layer is a metal foil such as aluminum, whereas the thicker outer layer is made of an extruded polyamide, polypropylene or a polyethylene-propylene mixture or a cross-linked polyethylene; all of which are semi-crystalline thermoplastic polymers.

EP-A-0230457 discloses a composite fuel and vapour tube. The composite tube is a bendable tubular article for transport of fuels which comprises a bendable metal strip formed sleeve extending throughout the length of the article and having an adhesive layer on the other surface of the metal sleeve. A flexible plastic jacket encases the metal sleeve. Additionally, the metal sleeve has a flexible bendable tubular liner that is made of petroleum resistant materials. The metal sleeve used in the invention is preferably aluminum. The metal sleeve offers sufficient strength to dominate over the resiliency of the plastic layer when the tubing is bent to a desired configuration.

US-A-4559973 discloses a water impervious heat shrinkable tube. The tube comprises inner and outer layer plastic layers forming a tube and a laminated metal foil layer interposed between the inner and outer layers. The metal foil layer has a thickness of 0.1 mm. The plastic material laminated on both sides of the metal foil film is selected from the group consisting of polyethylene, polyvinyl chloride, saturated polyester, cross-linked polyethylene, ethylene-propylene rubber, silicon rubber, chloroprene rubber and fluoroplastic.

Some of these prior art examples have excellent corrosion resistance against salt water and good adhesion properties, but at the same time low mechanical properties. On the other hand, alloys with good mechanical properties tend to have low corrosion resistance. The inventors have found that the clad product described in WO-A-2009/146993 can sometimes be difficult to weld.

It is an object of the invention to provide a multi-layer tube where the aluminium sheet layer possesses good strength levels and is easy to weld.

In accordance with the invention there is provided a multilayer tube product comprising inner and outer plastic or polymer layers and an intermediate metallic layer characterized in that the intermediate metallic layer comprises an aluminium sheet having the following composition:

| | |
|---|---|
| Si | 1.5 to 4% |
| Mg | 0.3 to 3.0% |
| Mn | up to 1.5% |
| Fe | up to 1.0% |
| Cu | up to 0.5% |
| Zn | up to 0.3% |

other elements up to 0.05% each and up to 0.2% in total remainder aluminium.

The Si content is selected to be between 1.5 and 4 for the following reasons. Below 1.5 cracks may occur during TIG welding of the multilayer tubes and above 4 the elongation at rupture falls significantly. To maintain the formability of the multilayer tubes the elongation at rupture needs to be above 20% and the elongation at rupture for higher Si contents can be as low as 10%. A lower limit of 2 is preferable to be sure of TIG welding performance.

Mg is added to the alloy to promote strength and ductility and to enhance welding performance. When the Mg content is low the strength of the alloy is reduced and there is an increased tendency for cracks to occur during welding. For these reasons the Mg content is 0.3 and above. When the Mg content is too high there is an increased risk of corrosion. The Mg content is therefore limited to a maximum of 3.0.

Mn may be added to increase the mechanical properties but is only added in amounts that cause no deterioration in the elongation at rupture, in corrosion resistance or weldability. For these reasons the upper limit for Mn is 1.5. In order to take advantage of the strengthening effect of Mn and an optimized corrosion performance, a preferred range for Mn is 0.3-1.0.

No particular control is necessary to limit the Fe content at extremely low values. On the other hand, however, the Fe content must not be too high otherwise there is an increased risk of corrosion and there will be a reduction in the value of elongation at rupture (A50). For these reasons the Fe content is limited to a maximum of up to 1.0. To be sure of the optimised formability through good elongation values, it is preferred that the Fe content have an upper limit of 0.4.

Cu has a negative effect on corrosion resistance and this is the reason for selecting an upper limit of 0.5. Although additions of Cu can be used for strengthening purposes the effect on corrosion means that the preferred upper limit for Cu is 0.3.

In another embodiment of the invention the aluminium sheet can be provided with a clad layer. In such a case the chemical composition of the at least one clad layer is a 1XXX, 3XXX or 7XXX series alloy composition selected mainly for resistance to corrosion.

In the case where the clad layer is a 1XXX series alloy the preferred composition is one selected from the group consisting of 1050, 1050A, 1070 and 1200.

In the case where the clad layer is a 3XXX series alloy the preferred composition is one where the Mn content is <0.8 weight %. If the Mn content is >0.8 weight % corrosion performance is reduced. Typical 3XXX series alloys which meet this criterion include the following registered designations: 3002, 3102, 3105, 3105A, 3105B, 3006, 3X07, 3010, 3015, 3016, 3019, 3020, 3025 and 3030. In the case where the clad layer is a 3XXX series alloy the more preferred alloy is 3105.

In the case where the clad layer is a 7XXX series alloy the preferred composition is one where the Zn content is <2 weight %, and the maximum contents of Mg and Cu are both 0.2 weight %. The well known alloys 7070 and 7072 meet this criterion although there are other compositional possibilities, of course, which have not been registered with the Aluminum Association.

The aluminium sheet layer incorporated within this invention can be fabricated by conventional methods known to those in the aluminium industry. Such process methods include direct chill casting into an ingot up to 800mm thick, scalping, homogenisation, hot rolling, cold rolling, intermediate and final anneals as necessary. Normally the aluminium sheet product of the invention is supplied in the 'O' temper.

For the clad version of the invention the sheet product can be made by a traditional roll bonding approach where the core layer and clad layers are initially cast as separate ingots, homogenized and hot rolled to an intermediate thickness, then hot or cold rolled together to form the composite structure, followed by further rolling as necessary. As is known to the skilled person, various heat treatment steps may be incorporated within this process if necessary, such as intermediate anneals. An alternative method of manufacture for the clad version of the invention involves casting the core and clad layers together to form a single ingot having distinct compositional regions. Such methods are also well known in the aluminium industry and are described by patents such as WO04/112992 or WO98/24571. The process according to WO04/112992 is better suited to manufacture of this product because there is no need for an interlayer during casting. Once the composite ingot has been cast it can be processed in the conventional manner and process steps may inlude homogenization, hot and cold rolling, together with other standard manufacturing steps such as annealing as may be considered necessary by the skilled person.

Examples according to the invention will now be described. Five alloy samples were cast having compositions shown in Table 1, (all values in weight%).

**Table 1:**

| | Composition | | | | |
|---|---|---|---|---|---|
| Sample ID | Si | Fe | Cu | Mn | Mg |
| A | 3.15 | 0.3 | 0.06 | 0.67 | 1.63 |
| B | 3.14 | 0.6 | 0.58 | 0.95 | 1.08 |
| C | 3.22 | 0.42 | 0.24 | 0.98 | 0.63 |
| D | 2.57 | 0.36 | 0.06 | 0.67 | 1.18 |
| E | 3.47 | 0.58 | 0.42 | 0.98 | 0.54 |

These samples were cast into small, lab-scale ingots having dimensions 200mm x 150mm x 25mm. Each ingot was scalped, heated over a period of 8 hours to 520°C, held at that temperature for 2 hours and then hot rolled. After hot rolling each strip was cold rolled in a conventional manner to a final sheet thickness of 0.2mm. All sheets were annealed to the O temper by a heat treatment of 380°C for 2 hours.

The various samples were tensile tested at 20°C and 95°C. The tensile results are shown in Table 2.

**Table 2:**

| | Testing temperature 20°C | | |
|---|---|---|---|
| Sample | Rₘ (MPa) | Rₚ0.2 | A₅₀ (%) |
| A | 135.7 | 57.8 | 23.3 |
| B | 159.4 | 63.1 | 20.4 |
| C | 148.3 | 62.4 | 20.6 |
| D | 137.6 | 59.5 | 22.1 |
| E | 160.2 | 63.1 | 20.6 |

| | Testing temperature 95°C | | |
|---|---|---|---|
| Sample | Rₘ (MPa) | Rₚ0.2 | A₅₀ (%) |
| A | 125 | 67 | 25.8 |
| B | 158 | 77.8 | 18.6 |
| C | 142 | 72.4 | 19.5 |
| D | 124 | 65.5 | 23.9 |
| E | 156 | 74.8 | 18.2 |

All of these strength levels, at both temperatures, are higher than would be achieved with AA1050A, AA3003 or AA8006 alloys of the same gauge.

Samples were also subjected to corrosion testing where the samples were immersed in a neutral salt solution at 20°C for 500 hours. None of the samples of the invention exhibited any corrosion, especially pitting after this test. In comparison, a prior art alloy AA8011 suffered extensive pitting under the same conditions.

Samples of the 0.2mm cold-rolled sheet were formed into tubes and seam welded using TIG welding at two different speeds, 40m/min and 50m/min. At a speed of 40m/min the current used was 110A, the voltage was 17V and the frequency of the AC current was 360Hz. At a speed of 50m/min the current used was 135A, the voltage was 18V and the frequency of the AC current was 460Hz. Under both sets of TIG welding conditions all alloy samples provided a high weld quality with no welds suffering from cracks or pin-hole formation.

## Claims

1. A multilayer tube product comprising inner and outer plastic, or polymer, layers and an intermediate metallic layer **characterized in that** the intermediate metallic layer comprises an aluminium sheet having the following composition (values in weight %):
| | |
|---|---|
| Si | 1.5 to 4 |
| Mg | 0.3 to 3.0 |
| Mn | up to 1.5 |
| Fe | up to 1.0 |
| Cu | up to 0.6 |
| Zn | up to 0.3 |
other elements up to 0.05 each and up to 0.2 in total remainder aluminium.

2. A product as claimed in claim 1 wherein the Si content is 2 to 4.

3. A product as claimed in claims 1 or 2 wherein the Mn content is 0.3 to 1.0.

4. A product as claimed in claims 1 to 3 wherein the Cu content is up to 0.3.

5. A product as claimed in claims 1 to 4 wherein the Fe content is up to 0.4.

6. A product as claimed in any of the previous claims wherein the aluminium sheet is clad on at least one side with a clad layer composition selected from the group consisting of 1XXX, 3XXX and 7XXX series alloys.

7. A product as claimed in claim 6 wherein the at least one clad layer comprises an alloy selected from the group consisting of 1050, 1050A, 1070 and 1200.

8. A product as claimed in claims 7 wherein the at least one clad layer comprises the 1050A alloy.

9. A product as claimed in claims 6 wherein the at least one clad layer comprises an alloy selected from the group consisting of 3002, 3102, 3105, 3105A, 3105B, 3006, 3X07, 3010, 3015, 3016, 3019, 3020, 3025 and 3030.

10. A product as claimed in claim 9 wherein the at least one clad layer comprises the 3105 alloy.

11. A product as claimed in claim 6 wherein the at least one clad layer comprises a composition where the Zn content is <2 weight %, and the maximum contents of Mg and Cu are both 0.2 weight %.
